# NEUE EUROPÄISCHE PATENTSCHRIFT

(11) **EP 0 660 660 B2**
(45) Veröffentlichungstag und Bekanntmachung des Hinweises auf die Entscheidung über den Einspruch: **03.04.2002**
(45) Hinweis auf die Patenterteilung: 10.09.1997
(21) Anmeldenummer: 94924767.0
(22) Anmeldetag: 15.07.1994
(51) Int. Cl.: A01C 17/00, A01D 41/00, A01D 41/12

(54) **VERFAHREN ZUR EINWIRKUNG AUF NUTZTERRITORIEN**
PROCESS FOR WORKING EXPLOITABLE TERRITORIES
PROCEDE PERMETTANT DE TRAVAILLER DES TERRES EXPLOITABLES

(30) Priorität: 17.07.1993 DE 4324048; 10.12.1993 DE 4342171
(43) Veröffentlichungstag der Anmeldung: 05.07.1995
(73) Patentinhaber: Dürrstein, Georg, D-97531 Obertheres (DE)
(72) Erfinder: Dürrstein, Georg, D-97531 Obertheres (DE)
(74) Vertreter: Götz, Georg, Dipl.-Ing.
(86) Internationale Anmeldenummer: EP9402329
(87) Internationale Veröffentlichungsnummer: WO9502318

(56) Entgegenhaltungen:
- EP-A- 0 181 308
- WO-A-86/05353
- WO-A-95/02316
- WO-A-95/02318
- DE-A- 3 613 195
- US-A- 4 747 301
- US-A- 4 807 131
- US-A- 4 833 480
- US-A- 5 014 914
- US-A- 5 214 757
- US-A- 5 220 876
- LANDTECHNIK, LANDTECHNIK, Bd.47, Nr.6, Juni 1992, DUSSELDORF Bd.47, Nr.6, Juni 1992, DUSSELDORF Seiten 273 - 276 Seiten 273 - 276 REITZ 'TECHNISCHE EINRICHTUNGEN FÜR DEN REITZ 'TECHNISCHE EINRICHTUNGEN FÜR DEN MÄHDRESCHER' MÄHDRESCHER'
- Richardson, GeoResearch Contracts for Richardson, GeoResearch Contracts for Geolink Projects Around the World, ARC Geolink Projects Around the World, ARC News, Vol. 12, No. 3, 1990 News, Vol. 12, No. 3, 1990
- GeoLink Operating Features GeoLink Operating Features
- GeoResearch Expands GPS Interface to GeoResearch Expands GPS Interface to ARC/INFO, ARC News, Summer 1989, page 40 ARC/INFO, ARC News, Summer 1989, page 40
- Mauney, PGS/GIS Integration: State of the Mauney, PGS/GIS Integration: State of the Art, Presentation at ION-GPS 92, Art, Presentation at ION-GPS 92, Albuquerque, New Mexico, made available to Albuquerque, New Mexico, made available to the public in September 1992 the public in September 1992
- Kruczynski, An Introduction To The Global Kruczynski, An Introduction To The Global Positioning System And Its Use In Urban GIS Positioning System And Its Use In Urban GIS Applications Applications
- Selected pages of PATHLOG Manual (SPEC0417) Selected pages of PATHLOG Manual (SPEC0417) 1991, published Sept. 1992 1991, published Sept. 1992
- Selected pages of GPS Pathfinder System Selected pages of GPS Pathfinder System General Reference Manual (SPEC0417) 1992, General Reference Manual (SPEC0417) 1992, published July 1992 published July 1992
- Selected pages of PFinder Software User's Selected pages of PFinder Software User's Manual (SPEC0417) 1991, published March Manual (SPEC0417) 1991, published March 1992 1992
- "Elevating differential PGS to practice" "Elevating differential PGS to practice" DGPS 91 Real Time Differential Applications DGPS 91 Real Time Differential Applications of the Global Positioning System, of the Global Positioning System, Braunschweig, 19.09.1991, Seite 478 Braunschweig, 19.09.1991, Seite 478
- Soilection, Firmenprospekt der Firma Soilection, Firmenprospekt der Firma ag-chem, Minnetoka, Sept. 1993 ag-chem, Minnetoka, Sept. 1993
- GeoLink v.2.0. Real Time GPS Mapping System GeoLink v.2.0. Real Time GPS Mapping System from Georesearch Inc. from Georesearch Inc.
- Mauney, PGS/GIS Integration: State of the Mauney, PGS/GIS Integration: State of the Art, Presentation at ION-GPS 92, Art, Art, Presentation at ION-GPS 92, Art, Presentation at ION-GPS 92, Albuquerque, Presentation at ION-GPS 92, Albuquerque, New Mexico, made available to the public in New Mexico, made available to the public in September 1992 September 1992
- Petersen, GEOLINK: Precision GPS Navigation Petersen, GEOLINK: Precision GPS Navigation or Improving Agricultural Productivity, GPS or Improving Agricultural Productivity, GPS World, January 1991 World, January 1991

## Beschreibung

Die Erfindung betrifft ein Verfahren zur Einwirkung auf Nutzterritorien, insbesondere zur Ausbringung oder Entnahme von Stoffen oder sonstigen Gegenständen auf oder von Bodenbereichen und/oder zur Vermessung von Bodenbereichen, insbesondere von landwirtschaftlichen Nutzflächen, mit einem telekommunikativen, vorzugsweise auf der Basis von Satelliten arbeitenden Ortungssystem und einem Arbeitsfahrzeug mit einer Datenverarbeitungseinrichtung, in der in Kommunikation mit dem Ortungssystem Positionsdaten für das Arbeitsfahrzeug in Echtzeit ermittelt und abgespeichert werden.

Aus GB 2 178 934 A ist ein landwirtschaftliches Bearbeitungs- und Nutzverfahren bekannt, bei dem in einem ersten Arbeitsgang ausgehend von einem Verfahrenswert, beispielsweise der Ernteausbeute, in Verbindung mit der Ermittlung der auf den jeweiligen Verfahrenswert bezogenen Ortsposition mittels eines satellitengesteuerten Ortungssystems ein Bearbeitungsplan für eine nachfolgende Bearbeitung erstellt wird. Im ersten Arbeitsgang fährt ein Fahrzeug über den Acker, wobei laufend in Echtzeit die Fahrzeugposition in einer Prozessoreinheit bestimmt und den jeweiligen lokalen Ertragswerten zugeordnet wird. Nach Beendigung der Fahrt werden die Daten manuell auf einen zweiten, externen Prozessor übertragen, der die Daten zur Erstellung eines lokalen Arbeitsplanes für die einzelnen Ackerbereiche aufbereitet, wonach die Daten in einen Arbeitsplan für die Düngemittelausbringung umgerechnet werden. Diese Daten werden anscheinend manuell einem dritten, am Fahrzeug angeordneten Prozessor zugeführt, der entsprechend dieser Daten in Kommunikation mit dem Ortungssystem, das die Position des Arbeitsfahrzeugs während der Ackerbearbeitung in Echtzeit erfaßt, die Düngemittelausbringung steuert.

Bedingt durch die ständige Positionserfassung des Fahrzeugs und die ortsspezifische Prozessorsteuerung der ausgebrachten Düngemittel ist es mit diesem Verfahren möglich, abhängig von der Genauigkeit der Positionserfassung den Acker entsprechend der lokalen Anforderungen zu düngen. Jedoch ist es dem Fahrer zu keiner Zeit während der Ackerfahrt möglich, zu überprüfen, ob er tatsächlich jeden Bereich des Feldes gedüngt hat, oder ob diverse Bereiche noch nicht angefahren wurden. Derartige Bereiche können nur sehr ungenau erst nach dem Düngen aufgrund der erfaßten Positionsdaten ermittelt werden. Erst danach kann die Nachbearbeitung der Arbeitsfehler vorgenommen werden, wofür der gesamte Düngevorgang erneut ausgeführt werden muß, was äußerst umständlich und mit großem Aufwand verbunden ist. Ein optimales Arbeitsergebnis kann mit diesem Verfahren nicht erreicht werden.

Andererseits zeigt die DE-OS 36 13 195 ein Verfahren und eine Vorrichtung zur Fahrweganzeige für straßengebundene Fahrzeuge, wobei der zurückgelegte Weg mit einem Entfernungssensor, insbesondere in Form eines die Drehung der Fahrzeugräder abtastenden Sensors, und die Fahrtrichtung mittels eines Richtungssensors, insbesondere eines Gyroskops, erfaßt und einer Signalverarbeitungseinheit zugeführt wird, die hieraus einen geschätzten, neuen Standort berechnet und diesen mit den in einzelne Liniensegmente aufgeteilten Straßen eines abgespeicherten Straßennetzes vergleicht Es wird das wahrscheinlichste Liniensegment ausgewählt und mittels eines Lichtpunkts auf dem in einem Monitor sichtbaren Kartennetz hervorgehoben. Dieser Vorgang wird regelmäßig wiederholt, und dadurch reihen sich einzelne Liniensegmente des Straßennetzes in hervorgehobenem Zustand aneinander und ergeben somit eine Reihe von aufeinanderfolgenden Lichtpunkten, welche den zurückgelegten Weg andeuten.

Vermutlich bedingt durch die begrenzte Kapazität des Speichersystems ist das Straßennetz in Liniensegmente aufgeteilt, die jeweils etwa 20 - 50 m eines Straßenverlaufs enthalten. Demzufolge haben die dargestellten Lichtpunkte einen entsprechenden Abstand, so daß von einer echten Fahrwegdarstellung keine Rede sein kann. Innerhalb eines vorgegebenen und ebenfalls angezeigten Straßennetzes können diese Lichtpunkte dem Fahrer noch eine grobe Orientierungshilfe geben; fehlt jedoch ein derartiges Straßennetz, wie insbesondere auf Feldern, so können derartige, in einem Abstand von etwa 20 - 50 m rastermäßig aneinandergesetzte Lichtpunkte dem Landwirt keine ausreichende Information darüber geben, wo er nun tatsächlich entlanggefahren ist. Diese Anzeigeform ist - selbst dann, wenn sie ohne Straßennetz überhaupt durchführbar ist - für einen Landwirt, dessen Düngerstreuer höchstens eine Breite von 5 - 10 m bei einer Fahrt düngen kann, viel zu ungenau, um bei der nächsten Spur erkennen zu können, wo nun tatsächlich schon gedüngt worden ist, und wo nicht. Aus der US-A-5 214 757 ist ein Verfahren bekannt, bei dem zur Herstellung topographischs Karten ein Territoriumsbereich festgelegt wird.

Der Erfindung liegt somit die Aufgabe zugrunde, ein Verfahren der eingangs genannten Art zu schaffen, bei dem es dem Fahrer des entsprechend ausgerüsteten Arbeitsfahrzeuges, gleich welcher Art, zu jeder Zeit möglich ist, seine exakte Position bezüglich des Nutzterritoriums während seiner Fahrt wie auch die bereits bearbeitete Fläche möglichst exakt sowie in Echtzeit zu erkennen, so daß eine zuverlässige Orientierung und gegebenenfalls Korrektur des Fahrweges möglich ist.

Zur Lösung dieser Aufgabe ist bei einem Verfahren der eingangs genannten Art gemäß Anspruch 1 erfindungsgemäß vorgesehen, daß
a) ein begrenzter Territoriumsbereich durch Umfahren des Territoriumsbereichs mit dem Arbeitsfahrzeug in Kommunikation mit dem Ortungssystem festgelegt wird; und daß
b) während des Einwirkungsbetriebes jeweils in Echtzeit die Positionsdaten des Arbeitsfahrzeugs in der Datenverarbeitungseinrichtung zum innerhalb des Nutzterritoriums zurückgelegten Fahrweg des Arbeitsfahrzeuges weiterverarbeitet werden, und der Fahrweg mittels eines Ausgabemediums laufend visuell angezeigt wird.
wobei die Anzeige des Fahrwegs in Form der tatsächlichen Eiwirkungsbreite des Arbeitsfahrzeugs auf das Nutzterritorium und gegebenenfalls den Territoriumsbereich erfolgt derart, dass das reale Verhältnis von bearbeiteter zu nicht bearbeiteter Fläche dargestellt wird.

Während des Fahrbetriebs werden somit zeitgleich die jeweilige Fahrzeugposition ermittelt, weiterverarbeitet und in Form des bereits zurückgelegten Fahrweges ausgegeben, so daß es dem Fahrer möglich ist, zu jeder Zeit den zurückgelegten Fahrweg nachzuvollziehen und auf Fahrfehler hin zu überprüfen. Diese können dann korrigiert werden, wobei das Korrekturergebnis ebenfalls visualisiert wird. Darüberhinaus ist eine zuverlässige Orientierung und ein exaktes Fahren entsprechend der angezeigten Fahrwegkarte möglich.

Dieses erfindungsgemäß auf der On-line-Anzeige des Fahrwegs basierende Verfahren kann für unterschiedlichste Einsatzzwecke verwendet werden. Im Rahmen der Bodenbearbeitung bzw. der Ausbringung von Stoffen, beispielsweise Düngemitteln, hat es sich als zweckmäßig erwiesen, wenn im Rahmen der Einwirkung zunächst ein innerhalb des Nutzterritoriums liegender Territoriumsbereich, beispielsweise ein Acker, in der Datenverarbeitungseinrichtung festgelegt wird, welcher dem Fahrer während der Fahrt ebenfalls laufend visuell angezeigt wird. Durch die Echtzeit-Anzeige der Fahrzeugposition kann der Fahrer dann stets feststellen, ob und wo er sich innerhalb des ausgewählten Territoriumsbereichs befindet. Gleichermaßen können auch ein oder mehrere innerhalb des Territoriumsbereichs liegende, von diesem auszunehmende Bereiche in der Datenverarbeitungseinrichtung festgelegt werden, die ebenfalls visuell angezeigt werden, so daß es dem Fahrer möglich ist, diese während der Fahrt zu meiden.

Die Festlegung der jeweiligen Bereiche kann auf unterschiedliche Weise erfolgen, beispielsweise durch manuelle Eingabe bestimmter Koordinaten der Bereiche, durch Einscannen von Landkarten, oder dergleichen. Jedoch hat es sich erfindungsgemäß als äußerst zweckmäßig herausgestellt, wenn die Festlegung der jeweiligen Bereiche in Kommunikation mit dem Ortungssystem durch einfaches Umfahren der jeweiligen Bereiche mit dem Arbeitsfahrzeug, dessen Position stets erfaßt und mitgeschrieben wird, erfolgt.

Nach erfolgter Festlegung des zu bearbeitenden Territoriumsbereichs ist es zur ökonomisch und biologisch sinnvollen Düngung erforderlich, entsprechend der innerhalb des Territoriumsbereichs vorhandenen Nährstoffverteilung und -konzentration zu düngen, so daß eine Überdüngung vermieden wird. Zu diesem Zweck werden innerhalb des zu bearbeitenden Bereichs Bodenproben entnommen, wobei die Position entweder auf dem Ausgabemedium vorgegeben wird, so daß diese lediglich angefahren werden müssen. Die Bodenproben können auch wahlweise gezogen werden, wobei in Folge der laufenden Positionserfassung des Fahrzeugs die Positionen der Proben mitgeschrieben werden. Anstelle der Entnahme von Bodenproben kann jedoch auch jedweder andere Gegenstand, beispielsweise Meßsonden. Bodenmarkierungen oder dergleichen dokumentiert ausgebracht bzw. wieder angefahren und entnommen werden. Nach erfolgter Analyse der Bodenproben wird anhand der Ergebnisse ein für den Territoriumsbereich charakteristischer Einwirkungsplan erstellt, der in der Datenverarbeitungseinrichtung abgespeichert wird und entsprechend welchem die Stellglieder der Ausbringvorrichtung für die Düngemittel von der Datenverarbeitungeinrichtung automatisch gesteuert werden. Gleichermaßen kann der Einwirkungsplan auch mittels des Ausgabemediums bezogen auf den Territoriumsbereich angezeigt werden, so daß entsprechend dem Plan die Düngung manuell gesteuert erfolgen kann.

Damit der Fahrer erkennen kann, ob er tatsächlich sämtliche Stellen bearbeitet hat, was letztendlich abhängig von der tatsächlichen Einwirkungsbreite des Arbeitsfahrzeugs, also beispielsweise der Breite der gezogenen Düngespur oder dergleichen ist, wird dem Fahrer erfindungsgemäß der Fahrweg in Form der tatsächlichen Einwirkungsbreite derart dargestellt, daß das reale Verhältnis von bearbeiteter zu nicht bearbeiteter Fläche dargestellt wird. Dies erfolgt, sofern das Augabemedium ein Monitor ist, durch den in seiner dargestellten Bemessung entsprechend der tatsächlichen Einwirkungsbreite variierbaren Cursor des Monitors, der den Fahrweg in Form einer kontinuierlichen Linie anzeigt.

Da die zu bearbeitenden Territoriumsbereiche in den seltensten Fällen eben sind, sondern zumeist eine Vielzahl von Erhöhungen und Senken aufweisen, erfolgt sowohl die Ermittlung der Positionsdaten als auch die Anzeige des Fahrweges unter Berücksichtigung dieser territoriumsspezifischen Unebenheiten, wofür sich das für die satellitengestützte Positionsermittlung verwendete Differential Global Positioning System (DGPS) unter Einbindung von wenigstens drei Satelliten, deren Signale für die Positionsermittlung verarbeitet werden, als zweckmäßig erwiesen hat.

Eine weitere Verwendungsmöglichkeit des Verfahrens ist die Dokumentation der Position von ausgebrachten und entnommenen Gegenständen auf oder von den jeweiligen Bodenbereichen, was beispielsweise zur exakten Positionierung von Bereichsmarkierungen, Meßeinrichtungen oder dergleichen erforderlich ist. Dabei werden auf einem festgelegten Territoriumsbereich im Rahmen einer ersten Ausbringung oder Entnahme der Positionsdaten in Kommunikation mit dem Ortungssystem erfaßt und angezeigt, das anschließende erneute Anfahren der jeweiligen Positionen erfolgt dann wiederum durch Visualisierung des Fahrwegs mit gleichzeitiger Anzeige der früher bestimmten Gegenstandspositionen.

Daneben kann das erfindungsgemäße Verfahren auch zur Dokumentation und Aufzeichnung des Fahrweges von Arbeitsfahrzeugen aller Art wie beispielsweise Bussen, Lkws, Privat-Pkws etc. Dabei dient die Datenverarbeitungseinrichtung und der Monitor quasi als Fahrtenschreiber, auf dem als einzuwirkender Territoriumsbereich der entsprechende Landkartenausschnitt dargestellt ist, in welchem sich das Fahrzeug befindet. Auf diesem Landkartenausschnitt wird dann dem Fahrer der Fahrtweg bzw. seine Position angezeigt, so daß eine einfache Orientierung möglich ist. Da die Anzeige des Fahrwegs bzw. der Position in Echtzeit sehr genau erfolgt, wird das Problem des "dead reckoning", das bisher zu äußerst ungenauen und der tatsächlichen Position hinterherlaufenden Anzeigen führte, vermieden.

Das im Rahmen der Positionsbestimmung verwendete Differential Global Positioning System (DGPS) liefert zur Erhöhung der Ortungsgenauigkeit Korrektursignale für die in der Datenverarbeitungseinrichtung ermittelten Positionsdaten, die mittels wenigstens einer stationären Feststation, die ebenfalls mit Sende- und Empfangseinrichtungen ausgestattet ist, berechnet und an die Datenverarbeitungseinrichtung übertragen werden. Dabei werden von der Feststation und dem Arbeitsfahrzeug eine Vielzahl verschiedener Signale von verschiedenen Satelliten gleichzeitig empfangen, wobei mindestens je drei Signale für die Berechnung der Position mittels der Datenverarbeitungseinrichtung einerseits und der Berechnung der Korrektursignale seitens der Feststation andererseits erforderlich sind. Die Datenverarbeitungseinrichtung wählt nun aus den Kontrollsignalen diejenigen aus, die zu den aus den von ihr empfangenen Satellitendaten berechneten Positionsdaten passen.

Sobald jedoch die Feststation und das Arbeitsfahrzeug nicht mehr dieselben Satellitensignale empfangen, was beispielsweise dann der Fall sein kann, wenn die mobile Empfangsstation aufgrund landschaftlicher Gegebenheiten vom Empfang eines Satelliten abgeschirmt ist, können der Datenverarbeitungseinrichtung nicht mehr die zu seinen Satellitendaten entsprechenden Korrekturdaten übermittelt werden, was zu Positionssprüngen bzw. Ortungsungenauigkeiten führen kann. Die Behebung dieses Nachteils, die zu einer deutlichen Reduzierung der Ortungsungenauigkeiten führt, ist bei diesem Positionsbestimmungsverfahren derart, daß erfindungsgemäß mittels der Sende- und Empfangseinheiten der Feststation und der Datenverarbeitungseinrichtung zwischen der Feststation und der Datenverarbeitungseinrichtung bidirektional Daten ausgetauscht werden, wobei die Datenverarbeitungseinrichtung die Sende- und Empfangseinheiten der Feststation steuert und/oder Daten abfragt. Es können somit ganz gezielt diejenigen Kontrolldaten abgefragt werden, die infolge der von dem Arbeitsfahrzeug empfangenen Satelliten, die zu den von der Feststation empfangenen Satelliten verschieden sein können, benötigt werden. Sollten sich nunmehr die Zahl oder die Art der von dem Arbeitsfahrzeug empfangenen Signale während des Betriebs ändern, so werden von der Feststation nur noch die Daten abgefragt, die zu den neuen empfangenen Signalen korrespondieren, sofern diese Daten vorhanden sind.

Weitere Vorteile, Merkmale und Einzelheiten des erfindungsgemäßen Verfahrens ergeben sich aus dem im folgenden beschriebenen Ausführungsbeispiel sowie anhand der Zeichnungen. Dabei zeigen:
- Fig. 1: eine Prinzipskizze des DGPS,
- Fig. 2: eine Ansicht des auf dem Monitor eingespielten Einwirkungsplans, der die auszubringenden Düngemittelmengen codiert wiedergibt,
- Fig. 3: ein Diagramm der Kommunikationsvernetzung der am Verfahren beteiligten Elemente,
- Fig. 4: ein auf dem Monitor dargestellter Territoriumsbereich,
- Fig. 5: der Territoriumsbereich aus Figur 4 mit den dargestellten Orten der entnommenen Bodenproben,
- Fig. 6: der Territoriumsbereich aus Figur 4 oder 5 mit dem dargestellten abgefahrenen Fahrweg, und
- Fig. 7: der Territoriumsbereich aus Figur 4 mit dargestellten von der Bearbeitung ausgenommenen Bereichen.

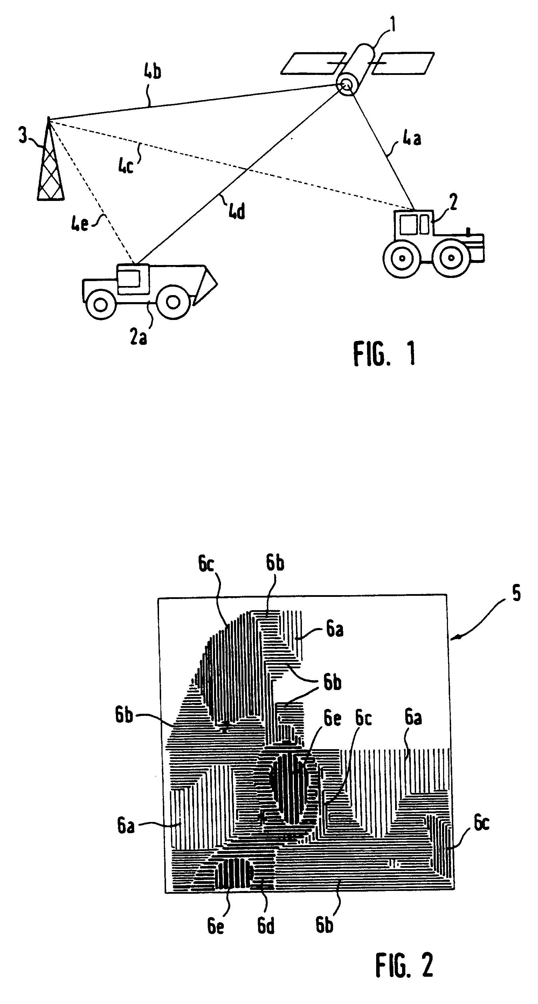

Figur 1 zeigt schematisch die Funktionsweise des DGPS. Satelliten 1 strahlen hochfrequente Radiowellen ab. Auf dem Arbeitsfahrzeug 2, welches sich auf dem zu bearbeitenden Bereich befindet, ist eine mobile Sende- und Empfangseinheit installiert, bestehend aus einer Datenverarbeitungseinrichtung, einem Funkmodem und einem Satellitenempfänger. Die Datenverarbeitungseinrichtung berechnet aus den von den Satelliten 1 abgestrahlten Radiowellen 4a Positionsdaten. Ferner ist eine weitere Sende- und Empfangseinheit (Satellitenempfänger mit Funkmodem) am Ackerrand vorgesehen, die als stationäre Feststation 3 dieselben hochfrequenten Radiowellen 4b empfängt.

Diese Feststation wird benötigt, um Korrekturpositionsdaten für eine genauere Ortung zu berechnen, wobei hierfür die genaue Position des Aufstellungsortes der Feststation 3 bekannt sein muß. Um die genaue Ortsposition der Feststation 3 programmieren zu können, ermittelt die mobile Station, welche sich anfangs räumlich neben der Feststation 3 befindet, durch eine mathematische Mittelwert-Berechnung mittels der Datenverarbeitungseinrichtung ihre Ortsposition und sendet diese Orts-Koordinaten an die Feststation 3. Da der Feststation 3 jetzt ihre Orts-Koordinaten bekannt sind, kann diese die eigentlichen Korrekturpositionsdaten berechnen und per Funk 4c zur mobilen Empfangsstation des Fahrzeuges 2 weiterleiten. Diese Korrekturdaten und die von der mobilen Empfangsstation ermittelten, ortsabhängigen Positionsdaten werden von der Datenverarbeitungseinrichtung 2 für die Berechnung der Echtzeit-Position des Fahrzeuges 2 mit einer Abweichung von kleiner als sechs Metern genutzt. Um diese Genauigkeit zu erreichen, müssen beide Satelliten-Empfänger in Bezug auf die zu empfangenden Satelliten synchronisiert werden. Erfindungsgemäß werden hierzu die einzelnen Kanäle des mobilen Empfängers mit denen des stationären Empfängers in der Datenverarbeitungseinrichtung abgeglichen, so daß keine unkorrigierten Satellitendaten die Ortsposition verfälschen können. Diese Positionsbestimmung wird jede Sekunde in der Datenverarbeitungseinrichtung durchgeführt, so daß der Fahrer eine Bereichsaufzeichnung durchführen kann oder seine momentane Fahrzeugposition relativ zur Bereichsumgrenzung auf dem Monitor mittels einer grafischen Markierung verfolgen kann.

Gezeigt ist ferner ein zweites Fahrzeug 2a, welches ebenfalls mittels des DGPS eine Positionsbestimmung anhand des Signals 4d vom Satelliten 1 und des Signals 4e von der Empfangsstation 3 durchführen kann, vorausgesetzt, es ist mit entsprechenden Empfangs- und Verarbeitungseinrichtungen ausgestattet.

Figur 2 zeigt als Skizze den auf dem Monitor eingespielte Einwirkungsplan 5, welcher dem Fahrer die positionsbezogenen Ausbringungsmengen des Düngemittels in farbig codierter Form angibt. Im gezeigten Beispiel sind die codierten Bereiche durch verschiedene Schraffierungen dargestellt. Anhand dieses Plans 5 entnimmt der Fahrer beispielsweise, daß in den Bereichen 6a wenig und in den Bereichen 6b, 6c und 6d ansteigend, in den Bereichen 6e der meiste Dünger auszubringen ist. Durch den ebenfalls auf dem Monitor dargestellten Cursor kann der Fahrer seine Momentanposition erkennen und entsprechend der Codierung 6a - 6e den Dünger ausbringen. Diese bereits vor Beginn der Feldbearbeitung im Rechner abgespeicherte Bodenkarte stellt im nachteiligen Stand der Technik gleichzeitig das nicht überprüfbare und somit lediglich rein rechnerisch ideale Resultat der Düngearbeit dar, da infolge der Nicht-Anzeige der Fahrtstrecke während der Ausbringung die tatsächliche Ausbringung der benötigten Düngemittelmengen an jedem Ort nicht überprüft und gegebenenfalls nachgebessert werden kann. Beim erfindungsgemäßen Verfahren jedoch kann infolge der ständigen Anzeige und Aufzeichnung des Fahrwegs und gegebenenfalls durch Nachbesserung der Ausbringung dieser vorgegebene Soll-Zustand annähernd erreicht werden. Weiterhin vorteilhaft ist die von der Datenverarbeitung gesteuerte Düngerausbringung und die automatische Abschaltung, sobald sich das Fahrzeug auf einer nicht zu düngenden Fläche (Sperrflächen) befindet. Hierdurch können Umweltschäden vermieden werden.

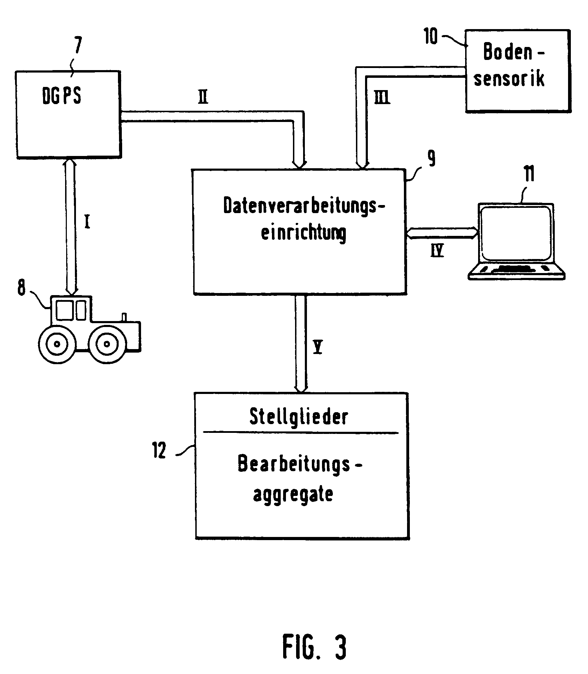

Figur 3 zeigt in anschaulicher Weise den Informations- bzw. Signalfluß während der Feldbearbeitung. Mittels des DGPS 7 und der Datenverarbeitungseinrichtung 9 wird die Position des Fahrzeugs 8 bestimmt (Pfeil I) und in der Datenverarbeitungseinrichtung 9 abgespeichert (Pfeil II). Dieser werden ferner Daten betreffend die Bodensensorik 10 zugeführt (Pfeil III). Diese Daten umfassen insbesondere die Positionsdaten der zur Bestimmung der Bodenqualität entnommenen Bodenproben als auch die daraus ermittelten Werte der benötigen Düngemittelmengen, wie sie durch der Einwirkungsplan (vgl. Figur 2) in codierter Form ausgegeben werden. Ferner können diese Daten auch die genauen Analysedaten der Bodenproben umfassen. Die Datenverarbeitungseinrichtung 9 ist mit einem Monitor 11 vernetzt, auf welchem die vom Bearbeiter benötigten Daten angezeigt werden (Pfeil IV). Darüber hinaus kommuniziert sie mit Stellgliedern 12 der Bearbeitungsaggregate (Pfeil V), um durch Steuerung der Stellglieder 12 beispielsweise die Ausbringungsmengen an Düngemittel entsprechend der Fahrzeugpositionsdaten und der Daten der Bodensensorik 10 zu steuern.

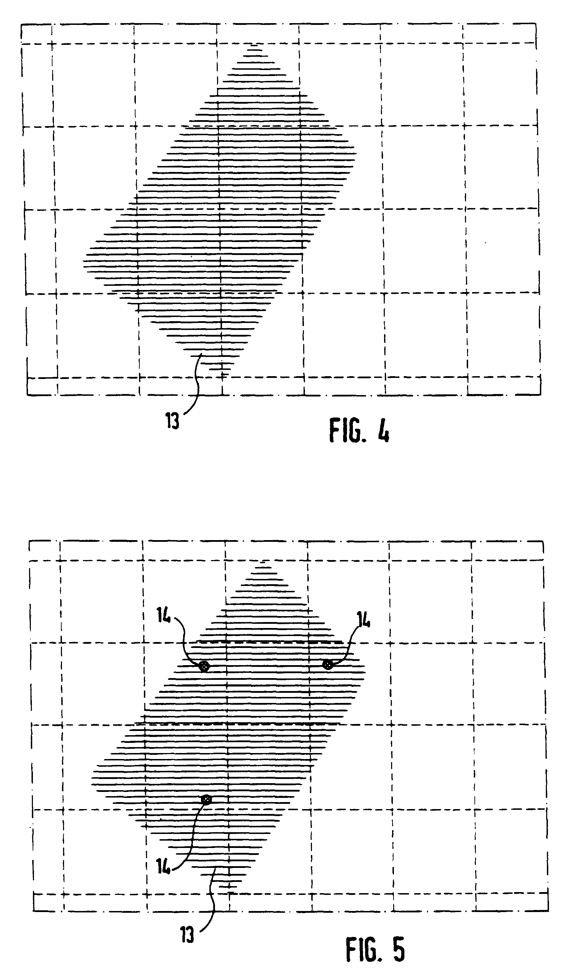

Die Figuren 4 bis 7 zeigen nunmehr beispielhaft die während der Bodenbearbeitung auf dem Monitor 11 dem Fahrer angezeigten Informationen. Zunächst wird dem Fahrer der durch Umfahren eines ausgewählten Bereichs festgelegte und vom mit seinen Positionsdaten bestimmte Territoriumsbereich 13 angezeigt. Die Daten des jeweiligen Bereiches werden in der Datenverarbeitungseinrichtung 9 abgespeichert. Anhand dieser mit einem Raster belegten "Feldkarte" kann der Fahrer dann eine exakte Ausbringung der Düngemittel vornehmen. Nachdem der Territoriumsbereich 13 in oben beschriebener Weise festgelegt worden ist, muß der Landwirt Bodenproben an einigen Stellen innerhalb des Bearbeitungsgebietes 13 entnehmen, damit infolge der Analyseergebnisse der bereits in Figur 2 gezeigte Einwirkungsplan erstellt werden kann. Die Positionsdaten der entnommenen Bodenproben werden ebenfalls von der Datenverarbeitungseinrichtung 9 erfaßt und abgespeichert. Die einzelnen Positionen werden dann auf dem Monitor 11 des "Ackerfahrtenschreibers" angezeigt, was in Figur 5 durch die Punkte 14 angedeutet ist. Da die Bestimmung und Abspeicherung der Positionsdaten mit Hilfe des DGPS erfolgt, ist eine mit der Realität übereinstimmende Vermessung des Innenprofils des Feldes gewährleistet. Durch die Abspeicherung der Positionsdaten, die u.a. einen Teil der Daten der Bodensensorik 10 bilden, ist es möglich, daß nach der Ausbringung der Düngung an exakt den gleichen Positionen erneut Bodenproben entnommen werden können, was beispielsweise zur Kontrolle des Düngeerfolges notwendig ist.

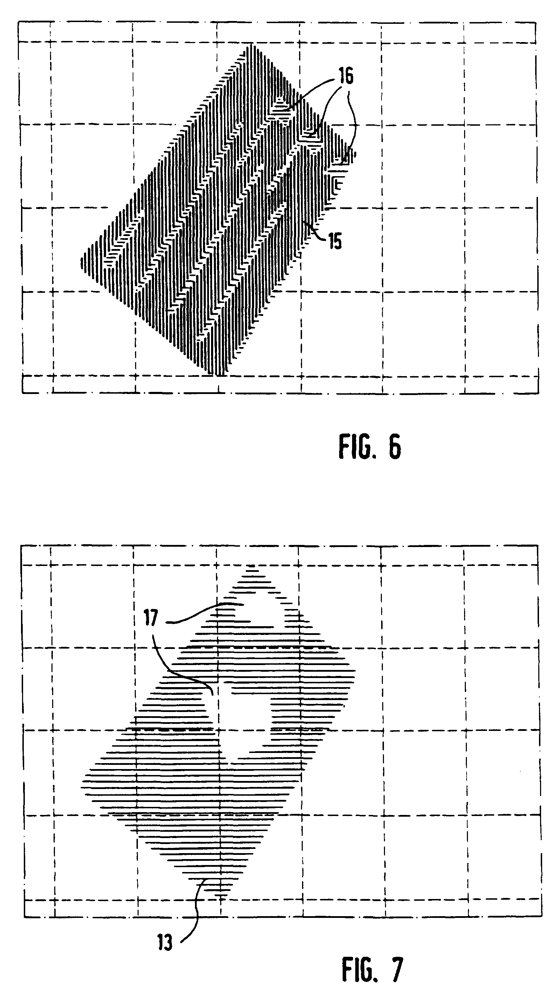

Liegt dem Fahrer nach Entnahme der Bodenproben der Einwirkungsplan wie in Figur 2 gezeigt vor, so kann die Ausbringung erfolgen. Im Rahmen der Ausbringung fährt der Fahrer den gesamten Territoriumsbereich 13 ab, was ihm gleichzeitig mit dem Abfahren auf dem Monitor 11 angezeigt wird, wie dies in Figur 6 dargestellt ist, wo der zurückgelegte Fahrtweg 15 zu entnehmen ist. Dabei entspricht die durch die Breite des Cursors angezeigte Fahrspur im Verhältnis zur Bemessung des dargestellten Territoriumsbereichs 13 im wesentlichen der tatsächlichen Breite, auf welcher der Dünger ausgebracht wird bezogen auf die reale Bereichsgröße. Dem Fahrer wird so stets die noch zu bearbeitende Nettofläche angegeben, so daß Sicherheit darüber besteht, daß tatsächlich auf dem angezeigten bearbeiteten Bereich der Dünger ausgebracht wurde. Anhand der Darstellung ist es für den Fahrer sofort ersichtlich, welche Stellen des Territoriumsbereichs 13 noch unbearbeitet sind. Diese Stellen 16 können dann gezielt angefahren werden und entsprechend dem Plan bearbeitet werden, so daß der gesamte Territoriumsbereich 13 lückenlos gedüngt werden kann.

Ferner ist es dem Fahrer auch möglich, Teilbereiche, die nicht bearbeitet werden sollen, sei es wegen zu hohem Düngergehalt oder wegen zu hohem Schwermetallgehalt oder infolge anderer gesetzlicher Vorschriften, festzulegen und von einer Bearbeitung so auszunehmen. Dies geschieht derart, daß der Fahrer nach Festlegung des Territoriumsbereichs 13 zur Festlegung der auszunehmenden Bereiche 17 diese mit seinem Fahrzeug umfährt, wobei die Positionsdaten wiederum in der Datenverarbeitungseinrichtung 9 berechnet und abgelegt werden. Auf dem Monitor 11 werden dann die von der Bearbeitung ausgenommenen Bereiche 17 angezeigt. Da dem Fahrer zu jeder Zeit seine jeweilige Position auf dem Bereich 13 mittels des Cursors auf dem Monitor 11 angezeigt wird, kann er folglich zuverlässig erkennen, wann er mit seinem Fahrzeug auf einen derartigen Bereich 17 kommt, so daß er, falls die Steuerung der Ausbringung manuell erfolgt, diese abstellen kann. Erfolgt die Steuerung jedoch über die Datenverarbeitungseinrichtung 9, so wird die Ausbringung automatisch unterbrochen.

## Patentansprüche

1. Verfahren zur Einwirkung auf Nutzterritorien, insbesondere zur Ausbringung oder Entnahme von Stoffen oder sonstigen Gegenständen auf oder von Bodenbereichen und zur Vermessung von Bodenbereichen, insbesondere von landwirtschaftlichen Nutzflächen, mit einem telekommunikativen, vorzugsweise auf der Basis von Satelliten arbeitenden Ortungssystem, und einem Arbeitsfahrzeug mit einer Datenverarbeitungseinrichtung, in der in Kommunikation mit dem Ortungssystem Positionsdaten für das Arbeitsfahrzeug in Echtzeit ermittelt und abgespeichert werden, **dadurch gekennzeichnet, daß**
a) ein begrenzter Territoriumsbereich (13) durch Umfahren des Territoriumsbereichs (13) mit dem Arbeitsfahrzeug (8) in Kommunikation mit dem Ortungssystem (7) festgelegt wird; und daß
b) während des Einwirkungsbetriebes jeweils in Echtzeit die Positionsdaten des Arbeitsfahrzeugs (8) in der Datenverarbeitungseinrichtung (9) zum innerhalb des Nutzterritoriums zurückgelegten Fahrweg des Arbeitsfahrzeugs (8) weiterverarbeitet werden, und der Fahrweg (15) mittels eines Ausgabemediums laufend visuell angezeigt wird,
c) wobei die Anzeige des Fahrwegs (15) in Form der tatsächlichen Einwirkungsbreite des Arbeitsfahrzeugs (8) auf das Nutzterritorium und gegebenenfalls den Territoriumsbereich (13) erfolgt, derart, daß das reale Verhältnis von bearbeiteter zu nicht bearbeiteter Fläche dargestellt wird.

2. Verfahren nach Anspruch 1, **dadurch gekennzeichnet, daß** der festgelegte, begrenzte Territoriumsbereichs (13) während der Fahrt des Arbeitsfahrzeugs (8) mittels des Ausgabemediums laufend visuell angezeigt wird.

3. Verfahren nach Anspruch 1 oder 2, **dadurch gekennzeichnet, daß** wenigstens ein innerhalb des Territoriumsbereichs (13) liegender, von diesem auszunehmender Bereich (17) in der Datenverarbeitungseinrichtung (9) festgelegt und laufend visuell angezeigt wird.

4. Verfahren nach Anspruch 3, **dadurch gekennzeichnet, daß** die Festlegung des auszunehmenden Bereichs (17) in Kommunikation mit dem Ortungssystem (7) erfolgt.

5. Verfahren nach Anspruch 4, **dadurch gekennzeichnet, daß** die Festlegung durch Umfahren des auszunehmenden Bereichs (17) mit dem Arbeitsfahrzeug (8) erfolgt.

6. Verfahren nach einem der Ansprüche 1 bis 5, **dadurch gekennzeichnet, daß** nach dem Festlegen des Territoriumsbereichs (13) und gegebenenfalls des auszunehmenden Bereichs (17) auf dem Territoriumsbereich (13) in Kommunikation mit dem Ortungssystem (7) Gegenstände mit dem Arbeitsfahrzeug (8) ausgebracht oder entnommen werden.

7. Verfahren nach Anspruch 6, **dadurch gekennzeichnet, daß** die Positionen (14) der ausgebrachten und/oder der entnommenen Gegenstände oder der auszubringenden und/oder der zu entnehmenden Gegenstände mittels des Ausgabemediums visuell bezogen auf den dargestellten Territoriumsbereich (13) angezeigt werden.

8. Verfahren nach Anspruch 7, **dadurch gekennzeichnet, daß** die Gegenstände auf dem Territoriumsbereich (13) zu entnehmende Bodenproben sind.

9. Verfahren nach Anspruch 8, **dadurch gekennzeichnet, daß** die Bodenproben analysiert werden und anhand der Ergebnisse ein für den Territoriumsbereich (13) charakteristischer, mit der Datenverarbeitungseinrichtung (9) kompatibler, lokaler Einwirkungsplan (5) erstellt wird.

10. Verfahren nach Anspruch 9, **dadurch gekennzeichnet, daß** der lokale Einwirkungsplan (5) mittels des Ausgabemediums bezogen auf den dargestellten Territoriumsbereich (13) angezeigt wird.

11. Verfahren nach Anspruch 9 oder 10, **dadurch gekennzeichnet, daß** in Abhängigkeit des Einwirkungsplans (5) organische und/oder anorganische Stoffe, insbesondere Düngemittel auf dem Territoriumsbereich (13) ausgebracht werden.

12. Verfahren nach einem der Ansprüche 9 bis 11, **dadurch gekennzeichnet, daß** mittels der Datenverarbeitungseinrichtung (9) in Abhängigkeit des Einwirkungsplans (5) am Arbeitsfahrzeug (8) angeordnete Stellglieder (12) gesteuert werden.

13. Verfahren nach einem der vorhergehenden Ansprüche, **dadurch gekennzeichnet, daß** die tatsächlich Einwirkungsbreite zur verhältniswahrenden Wiedergabe variabel in die Datenverarbeitungseinrichtung (9) eingebbar ist.

14. Verfahren nach einem der vorangehenden Ansprüche, **dadurch gekennzeichnet, daß** die Ermittlung der Positionsdaten und die Anzeige des Fahrweges (15) unter Berücksichtigung der territoriumspezifischen Unebenheiten erfolgt.

15. Verfahren nach einem der vorangehenden Ansprüche, **dadurch gekennzeichnet, daß** während der Einwirkung in Kommunikation mit dem Ortungssystem (7) in der Datenverarbeitungseinheit (9) die Länge des Fahrweges (15) ermittelt wird.

16. Verfahren nach einem der vorhergehenden Ansprüche, **dadurch gekennzeichnet, daß** nach der Festlegung des Territoriumsbereiches (13) und/oder des auszunehmenden Bereichs (17) die Flächeninhalte der Bereiche (13, 17) berechnet und am Ausgabemedium angezeigt werden.

17. Verfahren nach Anspruch 16, **dadurch gekennzeichnet, daß** als Nettofläche des Territoriumsbereichs (13) die Differenz der Flächeninhalte des Territoriumsbereichs (13) und des auszunehmenden Bereichs (17) berechnet und angezeigt wird.

18. Verfahren nach einem der vorangehenden Ansprüche, **dadurch gekennzeichnet, daß** das Ausgabemedium ein Monitor (11), vorzugsweise ein Farbmonitor ist.

19. Verfahren nach einem der Ansprüche 18, **dadurch gekennzeichnet, daß** der Fahrweg (15) mittels eines gegebenenfalls in seiner dargestellten Bemessung variierbaren Cursors auf dem Monitor (11) in Form einer kontinuierlichen Linie angezeigt wird.

20. Verfahren nach einem der vorangehenden Ansprüche, **dadurch gekennzeichnet, daß** die Datenverarbeitungseinrichtung (9) und/oder das Ausgabemedium zumindest vor Beginn des Einwirkungsbetriebes mit einer Zugriffssperre versehen wird.

21. Verfahren nach Anspruch 20, **dadurch gekennzeichnet, daß** an der Daatenverarbeitungseinrichtung (11) und/oder dem Ausgabemedium eine Sicherungsplombe angebracht wird.

22. Verfahren nach Anspruch 20 oder 21, **dadurch gekennzeichnet, daß** der Datenverarbeitungseinrichtung (9) wenigstens ein den Zugang oder Betrieb ermöglichendes Codewort eingegeben wird.

23. Verfahren nach einem der vorangehenden Ansprüche, wobei das Ortungssystem eine stationäre, mit der Datenverarbeitungseinrichtung kommunizierenden Feststation umfaßt, **dadurch gekennzeichnet, daß** zwischen der Feststation (3) und der Datenverarbeitungseinrichtung (9) bidirektional Daten ausgetauscht werden, wobei die Datenverarbeitungseinrichtung (9) die Kommunikation mit der Feststation (3) steuert und/oder spezifische Daten abfragt.

24. Verfahren nach Anspruch 23, **dadurch gekennzeichnet, daß** die Feststation (3) und die Datenverarbeitungseinrichtung (9) in Bezug auf die zu empfangenden Satellitensignale und/oder die auszutauschenden Daten miteinander synchronisiert sind.

25. Verfahren nach einem der vorangehenden Ansprüche, **gekennzeichnet durch** die Verwendung zum Ausbringen von organischen und/oder anorganischen Stoffen, insbesondere von Düngemitteln auf landwirtschaftliche Nutzflächen.

26. Verfahren nach einem der Ansprüche 1 bis 25, **gekennzeichnet durch** die Verwendung zum Vermessen von Bodenbereichen, insbesondere von landwirtschaftlichen Nutzflächen.

27. Verfahren nach einem der Ansprüche 1 bis 25, **gekennzeichnet durch** die Verwendung zur Dokumentation und Aufzeichnung des Fahrweges von Arbeitsfahrzeugen.

28. Verfahren nach einem der Ansprüche 1 bis 25, **gekennzeichnet durch** die Verwendung zur Dokumentation der Position von ausgebrachten oder entnommenen Gegenständen auf oder von Bodenbereichen, insbesondere von landwirtschaftlichen Nutzflächen.

## Claims

1. A method for working exploitable territories; more particularly for distributing or removing materials or other objects to or from areas of ground and for measuring areas of ground, more particularly exploitable agricultural areas, with a telecommunicative orientation system preferably operating on the basis of satellites, and a working vehicle with a data processing device, in which position data for the working vehicle is determined in real time in communication with the orientation system and stored, **characterised in that**
a) a defined territory region (13) is determined by the working vehicle (8) travelling around the territory region (13) in communication with the orientation system (7), and
b) during the working operation the position data of the working vehicle (8) is further processed in real time in the data processing device (9) to produce the route travelled by the working vehicle (8) within the exploitable territory, and the route (15) is continuously visually displayed by means of an output medium,
c) whereby the display of the route (15) is effected in the form of the actual working width of the working vehicle (8) on the exploitable territory and optionally on the territory region (13) in such a manner that the real ratio of worked to unworked area is shown.

2. A method according to Claim 1, **characterised in that** the determined, defined territory region (13) is continuously visually displayed by means of the output medium during the journey of the working vehicle (8).

3. A method according to Claim 1 or 2, **characterised in that** at least one area (17) lying within the territory region (13) and to be selected therefrom is determined in the data processing device (9) and is continuously visually displayed.

4. A method according to Claim 3, **characterised in that** the determining of the area (17) to be selected is effected in communication with the orientation system (7).

5. A method according to Claim 4, **characterised in that** the determining is effected by the working vehicle (8) travelling around the area (17) which is to be selected.

6. A method according to Claims 1 to 5, **characterised in that**, after determining the territory region (13) and optionally the area (17) to be selected therefrom in communication with the orientation system (7), objects are distributed or removed using the working vehicle (8).

7. A method according to Claim 6, **characterised in that** the positions (14) of the distributed and/or removed objects or the objects which are to be distributed and/or removed are visually displayed by means of the output medium in relation to the illustrated territory region (13).

8. A method according to Claim 7, **characterised in that** the objects on the territory region (13) are soil samples which are to be removed.

9. A method according to Claim 8, **characterised in that** the soil samples are analysed and the results are used to produce a local working plan which is characteristic of the territory region (13) and compatible with the data processing device (9).

10. A method according to Claim 9, **characterised in that** the local working plan (5) is displayed by means of the output medium in relation to the illustrated territory region (13).

11. A method according to Claim 9 or 10, **characterised in that** organic and/or inorganic materials, more particularly fertilisers are distributed to the territory region (13) dependent upon the working plan (5).

12. A method according to one of Claims 9 to 11, **characterised in that** operating members (12) arranged on the working vehicle (8) are controlled by means of the data processing device (9) as a function of the working plan (5).

13. A method according to one of the preceding Claims, **characterised in that** the actual working width can be variably fed into the data processing device (9) for ratio-maintaining reproduction.

14. A method according to one of the preceding Claims, **characterised in that** the determining of the position data and the display of the route (15) is effected taking into account the territory-specific unevenness.

15. A method according to one of the preceding Claims, **characterised in that** the length of the route (15) is determined in the data processing unit (9) during working in communication with the orientation system (7).

16. A method according to one of the preceding Claims, **characterised in that**, after determining the territory region (13) and/or the area (17) to be selected, the surface area of the areas (13,17) is calculated and displayed on the output medium.

17. A method according to Claim 16, **characterised in that** the difference of the surface area of the territory region (13) and the area to be selected (17) is calculated and displayed as the net surface area of the territory region (13).

18. A method according to one of the preceding Claims, **characterised in that** the output medium is a monitor (11), preferably a colour monitor.

19. A method according to Claim 18, **characterised in that** the route (15) is displayed in the form of a continuous line on the monitor (11) by means of a cursor which is optionally variable in its displayed dimensions.

20. A method according to one of the preceding Claims, **characterised in that** the data processing device (9) and/or the output medium is provided with an access lock at least prior to the start of working operation.

21. A method according to Claim 20 **characterised in that** a safety seal is fitted to the data processing device (11) and/or output medium.

22. A method according to Claim 20 or 21, **characterised in that** at least one code word allowing access or operation is supplied to the data processing device (9).

23. A method according to one of the preceding Claims, wherein the orientation system comprises a stationary, fixed station communicating with the data processing device, **characterised in that** data is exchanged bidirectionally between the fixed station (3) and the data processing device (9), the data processing device (9) controlling the communication with the fixed station (3) and/or interrogating specific data.

24. A method according to Claim 23, **characterised in that** the fixed station (3) and the data processing device (9) are synchronised with one another in respect of the satellite signals which are to be received and/or the data which is to be exchanged.

25. A method according to one of the preceding Claims, **characterised by** use for the distribution of organic and/or inorganic materials, more particularly fertilisers, to exploitable agricultural areas.

26. A method according to one of Claims 1 to 25, **characterised by** use for measuring areas of ground, in particular exploitable agricultural areas.

27. A method according to one of Claims 1 to 25, **characterised by** use for the documentation and recording of the route of working vehicles.

28. A method according to one of Claims 1 to 25, **characterised by** use for the documentation of the position of distributed or removed objects to or from areas of ground, in particular exploitable agricultural areas.

## Revendications

1. Procédé permettant d'exercer une action sur des territoires exploitables, notamment pour l'épandage ou le prélèvement de substances ou d'autres objets sur des ou de zones de terrain, et/ou pour le relevé topographique de zones de terrain, notamment de surfaces agricoles exploitables, à l'aide d'un système de positionnement par télécommunications, fonctionnant de préférence sur la base de satellites, et d'un véhicule de travail comprenant un système informatique dans lequel sont déterminées en temps réel et mémorisées, en communication avec le système de positionnement, des données de position pour le véhicule de travail, **caractérisé en ce que**
a) une zone de territoire limitée (13) est déterminée, en faisant le tour de la zone de territoire (13) avec le véhicule de travail (8), en communication avec le système de positionnement (7); et **en ce que**
b) en cours d'exercice de l'action, les données de position du véhicule de travail (8) sont respectivement traitées en temps réel dans le système informatique (9) pour conduire au parcours de déplacement du véhicule de travail (8) effectué à l'intérieur du territoire exploitable, et le parcours de déplacement (15) est visualisé en continu, au moyen d'un périphérique de sortie,
c) la visualisation du parcours de déplacement (15) s'effectuant sous la forme de la largeur d'action effective du véhicule de travail (8) sur le territoire exploitable et, le cas échéant, sur la zone de territoire (13), d'une façon telle que soit représenté le rapport réel de la surface travaillée à la surface non travaillée.

2. Procédé selon la revendication 1, **caractérisé en ce que** la zone de territoire limitée (13), déterminée, est visualisée en continu au moyen du périphérique de sortie, durant la marche du véhicule de travail (8).

3. Procédé selon la revendication 1 ou 2, **caractérisé en ce qu'**au moins une zone (17) située à l'intérieur de la zone de territoire (13) et qui est à exclure de cette dernière, est déterminée dans le système informatique (9) et est visualisée en continu.

4. Procédé selon la revendication 3, **caractérisé en ce que** la détermination de la zone (17) à exclure s'effectue en communication avec le système de positionnement (7).

5. Procédé selon la revendication 4, **caractérisé en ce que** la détermination s'effectue en faisant le tour de la zone (17) à exclure avec le véhicule de travail (8).

6. Procédé selon l'une des revendications 1 à 5, **caractérisé en ce qu'**après la détermination de la zone de territoire (13) et, le cas échéant, de la zone (17) à exclure, des objets sont épandus ou prélevés sur la zone de territoire (13) à l'aide du véhicule de travail (8), en communication avec le système de positionnement (7).

7. Procédé selon la revendication 6, **caractérisé en ce que** les positions (14) des objets épandus et/ou des objets prélevés ou des objets à épandre et/ou des objets à prélever, sont visualisées, relativement à la zone de territoire (13) représentée, au moyen du périphérique de sortie.

8. Procédé selon la revendication 7, **caractérisé en ce que** les objets sont des échantillons de terre à prélever sur la zone de territoire (13).

9. Procédé selon la revendication 8, **caractérisé en ce que** les échantillons de terre sont analysés, et **en ce qu'**à partir des résultats, est établi un plan d'action local (5) caractéristique pour la zone de territoire (13) et compatible avec le système informatique (9).

10. Procédé selon la revendication 9, **caractérisé en ce que** le plan d'action local (5) est visualisé au moyen du périphérique de sortie, relativement à la zone de territoire (13) représentée.

11. Procédé selon la revendication 9 ou 10, **caractérisé en ce qu'**en fonction du plan d'action (5), des substances organiques et/ou inorganiques, notamment des engrais, sont épandus sur la zone de territoire (13).

12. Procédé selon l'une des revendications 9 à 11, **caractérisé en ce qu'**au moyen du système informatique (9) sont commandés, en fonction du plan d'action (5), des actionneurs (12) disposés sur le véhicule de travail (8).

13. Procédé selon l'une des revendications précédentes, **caractérisé en ce que** la largeur d'action effective peut être introduite de manière variable dans le système informatique (9) en vue d'une restitution conservant les proportions.

14. Procédé selon l'une des revendications précédentes, **caractérisé en ce que** la détermination des données de position et la visualisation du parcours de déplacement (15) s'effectuent en tenant compte des accidents de terrain spécifiques au territoire.

15. Procédé selon l'une des revendications précédentes, **caractérisé en ce que** durant l'action, est déterminée dans le système informatique (9), en communication avec le système de positionnement (7), la longueur du parcours de déplacement (15).

16. Procédé selon l'une des revendications précédentes, **caractérisé en ce qu'**après la détermination de la zone de territoire (13) et/ou de la zone (17) à exclure, les aires des zones (13, 17) sont calculées et sont visualisées sur le périphérique de sortie.

17. Procédé selon la revendication 16, **caractérisé en ce que** la différence des aires de la zone de territoire (13) et de la zone (17) à exclure est calculée et visualisée en tant que surface nette de la zone de territoire (13).

18. Procédé selon l'une des revendications précédentes, **caractérisé en ce que** le périphérique de sortie est un moniteur (11), de préférence un moniteur couleur.

19. Procédé selon la revendication 18, **caractérisé en ce que** le parcours de déplacement (15) est visualisé sur le moniteur (11), sous la forme d'une ligne continue, au moyen d'un curseur dont la dimension représentée peut, le cas échéant, être modifiée.

20. Procédé selon l'une des revendications précédentes, **caractérisé en ce que** le système informatique (9) et/ou le périphérique de sortie sont pourvus, tout au moins avant le commencement de l'exercice de l'action, d'un verrouillage d'accès.

21. Procédé selon la revendication 20, **caractérisé en ce que** sur le système informatique (11) et/ou sur le périphérique de sortie, est placé un sceau de sûreté.

22. Procédé selon la revendication 20 ou 21, **caractérisé en ce qu'**au moins un mot code autorisant l'accès ou le fonctionnement est introduit dans le système informatique.

23. Procédé selon l'une des revendications précédentes, pour lequel le système de positionnement comprend une station fixe, stationnaire, communiquant avec le système informatique, **caractérisé en ce qu'**entre la station fixe (3) et le système informatique (9), des données sont échangées de manière bidirectionnelle, le système informatique (9) pilotant la communication avec la station fixe (3) et/ou lisant des données spécifiques.

24. Procédé selon la revendication 23, **caractérisé en ce que** la station fixe (3) et le système informatique (9) sont synchronisés l'un par rapport à l'autre, relativement aux signaux de satellites à capter et/ou aux données à échanger.

25. Procédé selon l'une des revendications précédentes, **caractérisé par** son utilisation pour l'épandage de substances organiques et/ou inorganiques, notamment d'engrais, sur des surfaces agricoles exploitables.

26. Procédé selon l'une des revendications 1 à 25, **caractérisé par** son utilisation pour le relevé topographique de zones de terrain, notamment de surfaces agricoles exploitables.

27. Procédé selon l'une des revendications 1 à 25, **caractérisé par** son utilisation pour réaliser une documentation et un tracé du parcours de déplacement de véhicules de travail.

28. Procédé selon l'une des revendications 1 à 25, **caractérisé par** son utilisation pour réaliser une documentation concernant la position d'objets épandus sur des zones de terrain ou prélevés de zones de terrain, notamment de surfaces agricoles exploitables.
